# EUROPEAN PATENT APPLICATION

(11) **EP 4 265 973 A1**
(43) Date of publication of application: **25.10.2023**
(21) Application number: 21926781.2
(22) Date of filing: 15.12.2021
(51) Int. Cl.: F24F 11/54, F24F 11/56, G06F 8/65

(54) **UPDATE DEVICE, INDOOR AND OUTDOOR UNITS, UPDATE SYSTEM, UPDATE METHOD AND PROGRAMME**

(30) Priority: 22.02.2021 JP 2021025887
(71) Applicant: Mitsubishi Heavy Industries Thermal Systems, Ltd., Tokyo, 100-8332 (JP)
(72) Inventor: YOKOHAMA, Koji, Tokyo 100-8332 (JP); TAKAHASHI, Kazuyoshi, Tokyo 100-8332 (JP)
(74) Representative: Cabinet Beau de Loménie
(86) International application number: PCT/JP2021/046171
(87) International publication number: WO 2022/176356

(57) **Abstract**

This update device is connected to a communication line connecting a plurality of indoor and outdoor units, and comprises: a reduction instruction unit which transmits, to a plurality of indoor and outdoor units, an instruction to reduce the communication cycle of control signals transmitted and received between the plurality of indoor and outdoor units via the communication line; an update processing unit which carries out a programme update processing on target indoor or outdoor units; and a restoration instruction unit which transmits, to the plurality of indoor and outdoor units, an instruction to restore the communication cycle of the control signals.

## Description

### Technical Field

The present disclosure relates to an update device, an indoor and outdoor unit, an update system, an update method, and a programme.

This application claims the priority of Japanese Patent Application No. 2021-025887 filed in Japan on February 22, 2021, the content of which is incorporated herein by reference.

### Background Art

In an air conditioner, a programme may be updated in order to add or change a function. A technique capable of easily updating the programme by using a communication line connecting an outdoor unit and an indoor unit (hereinafter, the outdoor unit and the indoor unit are collectively referred to as "indoor and outdoor units") constituting the air conditioner in an update work of the programme has been known (see, for example, PTL 1).

Further, in relation to the above technique, PTL 2 discloses an air conditioner that executes automatic update processing of a programme in a case where conditions of "a resident person is not detected" and "an air conditioning operation is not performed" are satisfied.

### Citation List

### Patent Literature

[PTL 1] Japanese Patent No. 3819583
[PTL 2] Japanese Unexamined Patent Application Publication No. 2015-078770

### Summary of Invention

### Technical Problem

The above-mentioned communication line is originally used for indoor and outdoor units being operated to exchange control signals with each other. Thus, it is assumed that, in a case where an indoor and outdoor unit other than the indoor and outdoor unit of which the programme is to be updated is operating, it takes a long time to update the programme due to the influence of the traffic of the control signal exchanged by using the identical communication line.

An object of the present disclosure is to provide an update device, an indoor and outdoor unit, an update system, an update method, and a programme capable of shortening an update time of a programme of an indoor and outdoor unit.

### Solution to Problem

An update device of the present disclosure is a device that is connected to a communication line connecting a plurality of indoor and outdoor units. The device includes a reduction instruction unit that transmits, to the plurality of indoor and outdoor units, an instruction to reduce a communication cycle of a control signal transmitted and received between the plurality of indoor and outdoor units via the communication line, an update processing unit that performs update processing of a programme on a target indoor and outdoor unit, and a restoration instruction unit that transmits, to the plurality of indoor and outdoor units, an instruction to restore the communication cycle of the control signal.

Further, an indoor and outdoor unit of the present disclosure includes a control signal transmission and reception unit that transmits and receives a control signal to and from another indoor and outdoor unit or a centralized controller via a communication line at a predetermined communication cycle, and a communication cycle changing unit that reduces a communication cycle of the control signal in a case where an instruction to reduce the communication cycle of the control signal is received via the communication line, and restores the communication cycle of the control signal in a case where an instruction to restore the communication cycle of the control signal is received via the communication line.

Further, an update system of the present disclosure includes the above-mentioned update device and the above-mentioned indoor and outdoor unit.

Further, an update method of the present disclosure is an update method for updating a programme by using an update device connected to a communication line connecting a plurality of indoor and outdoor units. The method includes a step of transmitting, to the plurality of indoor and outdoor units, an instruction to reduce a communication cycle of a control signal transmitted and received between the plurality of indoor and outdoor units via the communication line, a step of performing update processing of a programme on a target indoor and outdoor unit, and a step of transmitting, to the plurality of indoor and outdoor units, an instruction to restore the communication cycle of the control signal.

Further, a programme of the present disclosure causes an update device connected to a communication line connecting a plurality of indoor and outdoor units to execute a step of transmitting, to the plurality of indoor and outdoor units, an instruction to reduce a communication cycle of a control signal transmitted and received between the plurality of indoor and outdoor units via the communication line, a step of performing update processing of a programme on a target indoor and outdoor unit, and a step of transmitting, to the plurality of indoor and outdoor units, an instruction to restore the communication cycle of the control signal.

### Advantageous Effects of Invention

In accordance with the above-described update device, indoor and outdoor unit, update system, update method, and programme, it is possible to shorten the update time of the programme of the indoor and outdoor unit.

### Brief Description of Drawings

Fig. 1 is a diagram illustrating an overall configuration of an update system according to a first embodiment.
Fig. 2 is a first diagram illustrating a functional configuration of an update device according to the first embodiment.
Fig. 3 is a second diagram illustrating the functional configuration of the update device according to the first embodiment.
Fig. 4 is a diagram illustrating a functional configuration of an indoor and outdoor unit according to the first embodiment.
Fig. 5 is a diagram illustrating a processing flow of the update device and the indoor and outdoor unit according to the first embodiment.
Fig. 6 is a diagram for describing contents of processing of the update device and the indoor and outdoor unit according to the first embodiment.

### Description of Embodiments

### [First Embodiment]

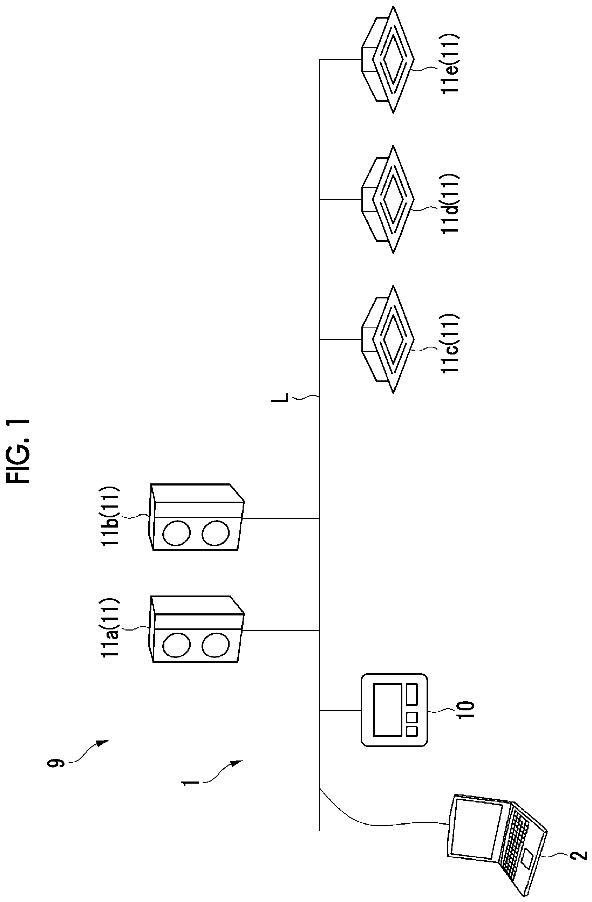

Hereinafter, an update system according to a first embodiment will be described in detail with reference to Figs. 1 to 6.

### (Overall Configuration)

Fig. 1 is a diagram illustrating an overall configuration of the update system according to the first embodiment.

As illustrated in Fig. 1, an update system 9 is a system for updating control programmes of outdoor units 11a and 11b and indoor units 11c, 11d, and 11e constituting an air conditioning system 1.

The update system 9 includes the air conditioning system 1 including a centralized controller 10 and a plurality of indoor and outdoor units 11 (outdoor units 11a and 11b and indoor units 11c, 11d, and 11e), and an update device 2.

The air conditioning system 1 will be described.

The air conditioning system 1 is, for example, a commercial package air conditioner installed in a building or the like. The air conditioning system 1 includes the centralized controller 10, the plurality of outdoor units 11a and 11b, and indoor units 11c, 11d, and 11e. Hereinafter, the plurality of outdoor units 11a and 11b and indoor units 11c, 11d, and 11e will be collectively referred to as the indoor and outdoor units 11.

The centralized controller 10 is a control panel that comprehensively controls operations of the plurality of indoor and outdoor units 11.

The indoor and outdoor units 11 are connected through a common refrigerant pipe (not illustrated), and indoor air conditioning is implemented by heat exchange by a refrigerant circulating in the refrigerant pipe. The indoor and outdoor units 11 operate in accordance with an operation command (a cooling and heating operation, a set temperature, or the like) given by the centralized controller 10.

As illustrated in Fig. 1, component devices (centralized controller 10 and indoor and outdoor unit 11) of the air conditioning system 1 are connected to one communication line L to be capable of communicating with each other.

Normally, the centralized controller 10 and the indoor and outdoor units 11 being operated exchange control signals with each other at regular intervals (for example, at intervals of one second) via the communication line L. Specifically, the control signal is the operation command (the cooling and heating operation, the set temperature, or the like) for each indoor and outdoor unit 11 or a signal (an abnormality detection signal or the like) indicating an individual state of the indoor and outdoor unit 11. For example, in a case where there is a change in a set temperature or the like, the air conditioning system 1 can immediately reflect such a change in the operation by constantly transmitting and receiving such a control signal between the component devices, and in a case where an abnormality has occurred, a protective operation (emergency stop or the like) can be immediately executed.

Next, the update device 2 will be described.

The update device 2 is a terminal device used in a case where the control programmes of the indoor and outdoor units 11 constituting the air conditioning system 1 are updated. The update device 2 may be, for example, a portable notebook PC or tablet terminal. A worker (serviceman) in charge of the air conditioning system 1 connects the update device 2 to the communication line L in a case where the control programme of each indoor and outdoor unit 11 is updated. The worker designates one indoor and outdoor unit 11 of which the control programme is to be updated through the update device 2, and executes update processing for a new control programme.

Note that, the control programme of the indoor and outdoor unit 11 being operated cannot be updated. Accordingly, the worker designates the indoor and outdoor unit 11 that is not being operated (paused) and sets the designated indoor and outdoor unit as a target of which the control programme is to be updated. In the example of Fig. 1, for example, in a case where the indoor unit 11c is being paused and another indoor and outdoor unit 11 is being operated, the worker designates the indoor unit 11c as the target of which the control programme is to be updated. In this case, even during the update processing of the control programme for the indoor unit 11c, the control signal is exchanged via the communication line L between the indoor and outdoor units 11 other than the indoor unit 11c or between the indoor and outdoor unit 11 other than the indoor unit 11c and the centralized controller 10.

### (Functional Configuration of Update Device)

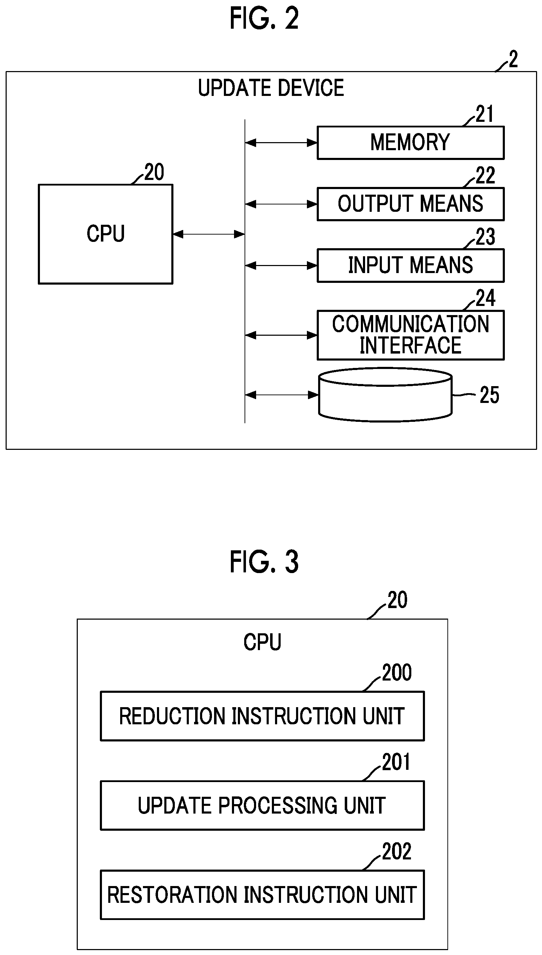

Figs. 2 and 3 are diagrams illustrating functional configurations of the update device according to the first embodiment.

As illustrated in Fig. 2, the update device 2 has a configuration as a general terminal device. That is, the update device 2 includes a CPU 20, a memory 21, output means 22 such as a display, input means 23 such as a mouse, a keyboard, and a touch pad, a communication interface 24, and a recording medium 25.

In the present embodiment, the communication interface 24 of the update device 2 can be connected to an external connection terminal of the communication line L (Fig. 1). Further, an update control programme or the like is retracted in the recording medium 25.

Next, a function of the CPU 20 will be described with reference to Fig. 3.

The CPU 20 exerts functions as a reduction instruction unit 200, an update processing unit 201, and a restoration instruction unit 202 by operating according to a predetermined programme prepared in advance.

The reduction instruction unit 200 transmits, the plurality of indoor and outdoor units 11 and the centralized controller 10, an instruction to reduce a communication cycle of the control signal transmitted and received between the plurality of indoor and outdoor units via the communication line L (hereinafter, also referred to as a reduction instruction.).

The update processing unit 201 performs the update processing of the control programme on the target indoor and outdoor unit 11.

The restoration instruction unit 202 transmits, to the plurality of indoor and outdoor units 11 and the centralized controller 10, an instruction to restore the communication cycle of the control signal transmitted and received between the plurality of indoor and outdoor units via the communication line L (hereinafter, also referred to as a restoration instruction.).

### (Functional Configuration of Indoor and Outdoor Unit)

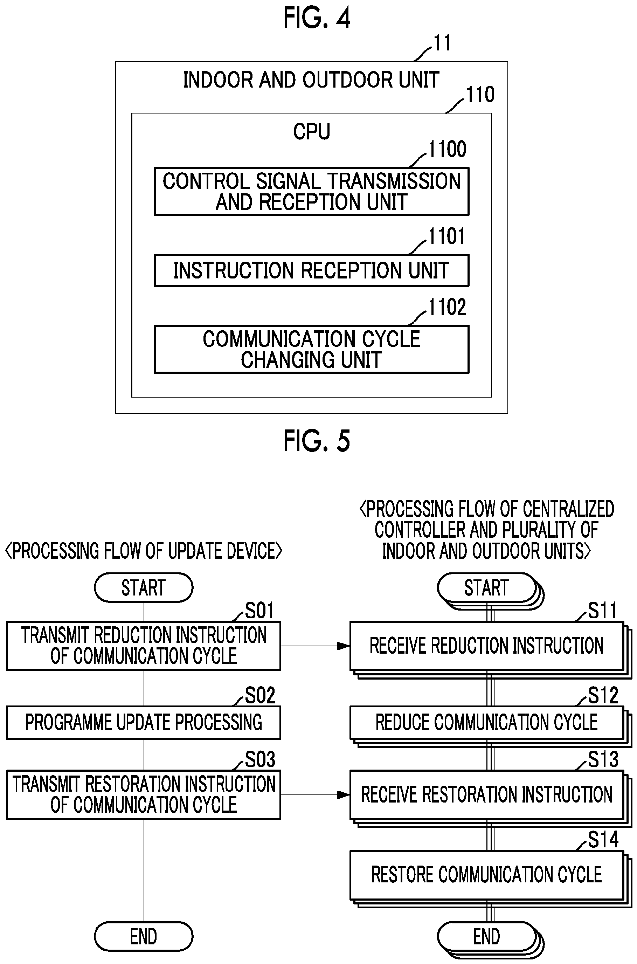

Fig. 4 is a diagram illustrating a functional configuration of the indoor and outdoor unit according to the first embodiment.

Next, a function of the indoor and outdoor unit 11 will be described with reference to Fig. 4.

As illustrated in Fig. 4, a CPU 110 of the indoor and outdoor unit 11 exerts functions as a control signal transmission and reception unit 1100, an instruction reception unit 1101, and a communication cycle changing unit 1102.

During the operation, the control signal transmission and reception unit 1100 transmits and receives a control signal to and from another indoor and outdoor unit 11 or the centralized controller 10 via the communication line L at a predetermined communication cycle.

The instruction reception unit 1101 receives the above-mentioned reduction instruction or restoration instruction from the update device 2 via the communication line L.

The communication cycle changing unit 1102 changes the communication cycle of the control signal in response to the reduction instruction or the restoration instruction received from the update device 2 via the communication line L. Specifically, the communication cycle changing unit 1102 reduces the communication cycle of the control signal in a case where the reduction instruction is received from the update device 2. Further, in a case where the restoration instruction is received from the update device 2, the communication cycle of the control signal is restored to the communication cycle before the reduction.

### (Processing Flow of Update Device and Indoor and Outdoor Unit)

Fig. 5 is a diagram illustrating a processing flow of the update device 2 and the indoor and outdoor unit 11 according to the first embodiment.

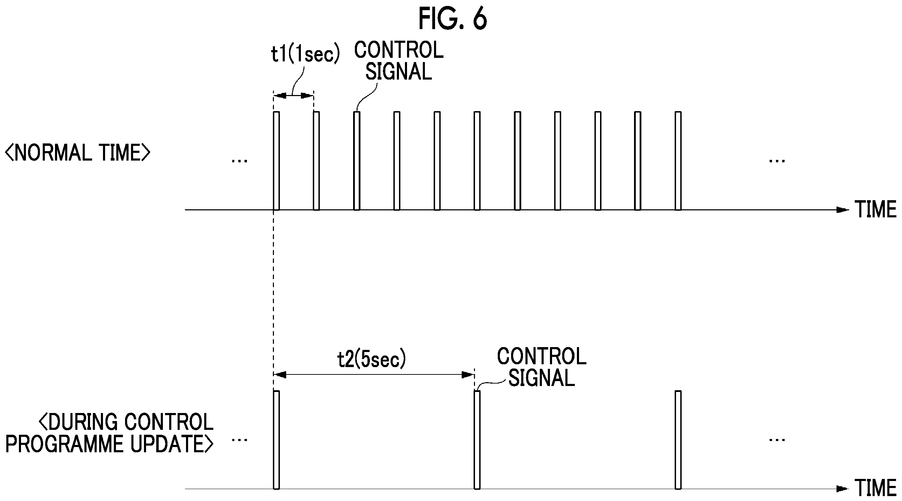

Further, Fig. 6 is a diagram for describing contents of processing of the update device 2 and the indoor and outdoor unit 11 according to the first embodiment.

Hereinafter, the processing flow of the update device 2 and the indoor and outdoor unit 11 will be described in detail with reference to Figs. 5 and 6.

First, the communication cycle of the control signal exchanged between the centralized controller 10 and each indoor and outdoor unit 11 in a normal time in a stage (normal time) before the processing flow of Fig. 5 is executed will be described with reference to Fig. 6.

An upper diagram of Fig. 6 illustrates that, in the normal time, the centralized controller 10 or the plurality of indoor and outdoor units 11 (control signal transmission and reception unit 1100) transmits the control signal via the identical communication line L by a time division multiplexing method at intervals of time t1. As illustrated on the upper side of Fig. 6, in the normal time, the centralized controller 10 and each indoor and outdoor unit 11 constantly transmit the control signal at intervals of time t1 (for example, one second).

A lower diagram of Fig. 6 illustrates that, in a case where the control programme is updated, the centralized controller 10 or the plurality of indoor and outdoor units 11 (control signal transmission and reception unit 1100) transmits the control signal via the identical communication line L by a time division multiplexing method at intervals of time t2. As illustrated on the lower side of Fig. 6, in a case where the control programme is updated, the centralized controller 10 and each indoor and outdoor unit 11 constantly transmit the control signal at intervals of time t2 (for example, five seconds) longer than time t1.

Here, a description will be made with reference to Fig. 5. The processing flow illustrated in Fig. 5 is executed in a case where the update device 2 starts the update processing of the control programme for the target indoor and outdoor unit 11 (indoor unit 11c of which the operation is being paused).

First, the reduction instruction unit 200 of the update device 2 transmits the reduction instruction to the centralized controller 10 and all the indoor and outdoor units 11 via the communication line L (step S01).

At this time, the centralized controller 10 and each indoor and outdoor unit 11 receive the reduction instruction (step S11). The centralized controller 10 and each indoor and outdoor unit 11 reduce the communication cycle of the control signal by receiving the reduction instruction (step S12). Consequently, as illustrated in Fig. 6, while the control programme of the indoor unit 11c is being updated, the communication cycle of the control signal performed via the communication line L is changed from time t1 to time t2 (t1 < t2 (for example, five seconds)). That is, while the control programme of the indoor unit 11c is being updated, the communication cycle of the control signal performed via the communication line L is reduced.

Subsequently, the update processing unit 201 of the update device 2 executes programme update processing for the indoor unit 11c via the communication line L (step S02). Consequently, the control programme of the indoor unit 11c is updated.

In a case where the programme update processing for the indoor unit 11c is completed, the restoration instruction unit 202 of the update device 2 subsequently transmits the restoration instruction to the centralized controller 10 and all the indoor and outdoor units 11 via the communication line L (step S03).

At this time, the centralized controller 10 and each indoor and outdoor unit 11 receive the restoration instruction (step S13). The centralized controller 10 and each indoor and outdoor unit 11 restore the communication cycle of the control signal to an original state (a state before the reduction) by receiving the restoration instruction (step S14).

### (Effects)

In accordance with the update system 9 described above, in a case where the update processing of the control programme is performed on one indoor and outdoor unit 11 being paused, the communication cycle of the exchange of the control signal performed by another indoor and outdoor unit 11 being operated and the centralized controller 10 is reduced. By doing this, as illustrated in Fig. 6, a time allotted to the exchange of the control signal in the communication line L decreases, and a time allotted to the communication required for the update processing of the control programme increases by the decreased time. In other words, the time required for the update processing of the control programme performed via the identical communication line L can be shortened by the amount that the traffic of the control signal on the communication line L is reduced.

On the other hand, in a case where the control signal is not exchanged between the indoor and outdoor unit 11 being operated and the centralized controller 10 during the update processing of the control programme, controllability of the indoor and outdoor unit 11 being operated is impaired. However, in accordance with the present embodiment, although the communication cycle of the control signal is reduced, since the exchange of the control signal is maintained at a constant communication cycle, it is possible to prevent the controllability of the indoor and outdoor unit 11 being operated from being impaired during the update processing of the control programme.

As described above, in accordance with the update system 9 according to the first embodiment, an update time of the control programme of the indoor and outdoor unit 11 can be shortened.

### (Modification Example)

Note that, although it has been described that the update system 9 according to the first embodiment reduces the communication cycles of all the control signals exchanged via the communication line L, other embodiments are not limited to this aspect.

For example, in another embodiment, a specific control signal among a plurality of control signals exchanged via the communication line L may be exchanged at a normal communication cycle even while the update processing of the control programme is being performed.

Specifically, the update system 9 according to another embodiment maintains the normal communication cycle for an abnormality detection signal indicating a defect requiring prompt action (protective operation) while the update processing of the control programme is being performed, and may reduce communication cycles of other control signals. In other words, even in a case where the communication cycle changing unit 1102 according to another embodiment receives the reduction instruction from the update device 2, among the control signals transmitted by the control signal transmission and reception unit 1100, only the communication cycle of the abnormality detection signal (control signal indicating whether or not the abnormality has occurred) may not be reduced.

Further, although the update device 2 according to the first embodiment has been described as transmitting the reduction instruction and the restoration instruction to the centralized controller 10, the update device is not limited to this aspect in other embodiments.

That is, the update device 2 according to another embodiment may have an aspect in which the reduction instruction and the restoration instruction are transmitted only to the indoor and outdoor unit 11 connected to the communication line L.

In the above-described embodiments, procedures of various kinds of processing of the update device 2 and the indoor and outdoor units 11 are stored in a computer-readable recording medium in the form of a programme, and the various kinds of processing are performed by causing a computer to read and execute the programme. Further, examples of the computer-readable recording medium include a magnetic disk, a magneto-optical disk, a CD-ROM, a DVD-ROM, a semiconductor memory, and the like. Further, this computer programme may be transferred to a computer through a communication line, and the computer receiving the transfer may execute the programme.

The programme may be for implementing a part of the above-mentioned functions. Further, the programme may be a file, a so-called difference file (difference programme), that can implement the above-mentioned functions in combination with a programme already recorded in a computer system.

As described above, although some embodiments according to the present disclosure have been described, all of these embodiments are presented as examples and are not intended to limit the scope of the invention. These embodiments can be implemented in various other forms, and various omissions, replacements, and changes can be made without departing from the gist of the invention. These embodiments and variations thereof are included in the scope of the invention described in the claims and the equivalent scope thereof, as well as in the scope and gist of the invention.

### [Appendix]

The update device 2, the indoor and outdoor unit 11, the update system 9, the update method, and the programme described in each embodiment are understood as follows, for example.
(1) An update device 2 according to a first aspect is a device that is connected to a communication line L connecting a plurality of indoor and outdoor units 11. The device includes a reduction instruction unit 200 that transmits, to the plurality of indoor and outdoor units 11, an instruction to reduce a communication cycle of a control signal transmitted and received between the plurality of indoor and outdoor units 11 via the communication line L, an update processing unit 201 that performs update processing of a programme on a target indoor and outdoor unit 11, and a restoration instruction unit 202 that transmits, to the plurality of indoor and outdoor units 11, an instruction to restore the communication cycle of the control signal.
(2) The update device 2 according to a second aspect is the update device 2 of (1), and the reduction instruction unit 200 may further transmit, to a centralized controller 10 connected to the communication line L, the instruction to reduce the communication cycle.
(3) The update device 2 according to a third aspect is the update device 2 of (1) or (2), and the restoration instruction unit 202 may further transmit, to a centralized controller 10 connected to the communication line L, the instruction to restore the communication cycle.
(4) An indoor and outdoor unit 11 according to a fourth aspect includes a control signal transmission and reception unit 1100 that transmits and receives a control signal to and from another indoor and outdoor unit 11 or a centralized controller 10 via a communication line L at a predetermined communication cycle, and a communication cycle changing unit 1102 that reduces a communication cycle of the control signal in a case where an instruction to reduce the communication cycle of the control signal is received via the communication line L, and restores the communication cycle of the control signal in a case where an instruction to restore the communication cycle of the control signal is received via the communication line L.
(5) The indoor and outdoor unit 11 according to a fifth aspect is the indoor and outdoor unit 11 of (4), and the communication cycle changing unit 1102 may not reduce a communication cycle of an abnormality detection signal that is a control signal indicating whether or not an abnormality occurs among the control signals even in a case where the instruction to reduce the communication cycle of the control signal is received.
(6) An update system 9 according to a sixth aspect includes the update device 2 of any one of (1) to (3), and the indoor and outdoor unit 11 of (4) or (5).
(7) An update method according to a seventh aspect is an update method for updating a programme by using an update device 2 connected to a communication line L connecting a plurality of indoor and outdoor units 11. The method includes a step of transmitting, to the plurality of indoor and outdoor units 11, an instruction to reduce a communication cycle of a control signal transmitted and received between the plurality of indoor and outdoor units 11 via the communication line L, a step of performing update processing of a programme on a target indoor and outdoor unit 11, and a step of transmitting, to the plurality of indoor and outdoor units 11, an instruction to restore the communication cycle of the control signal.
(8) A programme according to an eighth aspect causes an update device 2 connected to a communication line L connecting a plurality of indoor and outdoor units 11 to execute a step of transmitting, to the plurality of indoor and outdoor units 11, an instruction to reduce a communication cycle of a control signal transmitted and received between the plurality of indoor and outdoor units 11 via the communication line L, a step of performing update processing of a programme on a target indoor and outdoor unit 11, and a step of transmitting, to the plurality of indoor and outdoor units 11, an instruction to restore the communication cycle of the control signal.

### Industrial Applicability

The present disclosure relates to an update device, an indoor and outdoor unit, an update system, an update method, and a programme.

In accordance with the present disclosure, it is possible to shorten the update time of the programme of the indoor and outdoor unit.

### Reference Signs List

1: air conditioning system
10: centralized controller
11: indoor and outdoor unit
11a, 11b: outdoor unit
11c, 11d, 11e: indoor unit
110: CPU
1100: control signal transmission and reception unit
1101: instruction reception unit
1102: communication cycle changing unit
2: update device
20: CPU
200: reduction instruction unit
201: update processing unit
202: restoration instruction unit
21: memory
22: output means
23: input means
24: communication interface
25: recording medium
9: update system
L: communication line

## Claims

1. An update device that is connected to a communication line connecting a plurality of indoor and outdoor units, the device comprising:
a reduction instruction unit that transmits, to the plurality of indoor and outdoor units, an instruction to reduce a communication cycle of a control signal transmitted and received between the plurality of indoor and outdoor units via the communication line;
an update processing unit that performs update processing of a programme on a target indoor and outdoor unit; and
a restoration instruction unit that transmits, to the plurality of indoor and outdoor units, an instruction to restore the communication cycle of the control signal.

2. The update device according to claim 1, wherein the reduction instruction unit further transmits, to a centralized controller connected to the communication line, the instruction to reduce the communication cycle.

3. The update device according to claim 1 or 2, wherein the restoration instruction unit further transmits, to a centralized controller connected to the communication line, the instruction to restore the communication cycle.

4. An indoor and outdoor unit comprising:
a control signal transmission and reception unit that transmits and receives a control signal to and from another indoor and outdoor unit or a centralized controller via a communication line at a predetermined communication cycle; and
a communication cycle changing unit that reduces a communication cycle of the control signal in a case where an instruction to reduce the communication cycle of the control signal is received via the communication line, and restores the communication cycle of the control signal in a case where an instruction to restore the communication cycle of the control signal is received via the communication line.

5. The indoor and outdoor unit according to claim 4, wherein the communication cycle changing unit does not reduce a communication cycle of an abnormality detection signal that is a control signal indicating whether or not an abnormality occurs among the control signals even in a case where the instruction to reduce the communication cycle of the control signal is received.

6. An update system comprising:
the update device according to any one of claims 1 to 3; and
the indoor and outdoor unit according to claim 4 or 5.

7. An update method for updating a programme by using an update device connected to a communication line connecting a plurality of indoor and outdoor units, the method comprising:
a step of transmitting, to the plurality of indoor and outdoor units, an instruction to reduce a communication cycle of a control signal transmitted and received between the plurality of indoor and outdoor units via the communication line;
a step of performing update processing of a programme on a target indoor and outdoor unit; and
a step of transmitting, to the plurality of indoor and outdoor units, an instruction to restore the communication cycle of the control signal.

8. A programme causing an update device connected to a communication line connecting a plurality of indoor and outdoor units to execute:
a step of transmitting, to the plurality of indoor and outdoor units, an instruction to reduce a communication cycle of a control signal transmitted and received between the plurality of indoor and outdoor units via the communication line;
a step of performing update processing of a programme on a target indoor and outdoor unit; and
a step of transmitting, to the plurality of indoor and outdoor units, an instruction to restore the communication cycle of the control signal.
